(19) Europäisches Patentamt
European Patent Office
Office européen des brevets

(11) Numéro de publication : **0 165 827**
**B1**

(12) **FASCICULE DE BREVET EUROPÉEN**

(45) Date de publication du fascicule du brevet : **07.09.88**

(51) Int. Cl.[4] : **H 01 M 10/36**, H 01 M 4/58

(21) Numéro de dépôt : **85400794.5**

(22) Date de dépôt : **23.04.85**

(54) **Générateur électrochimique à électrode composite.**

(30) Priorité : **24.04.84 FR 8406416**

(43) Date de publication de la demande :
**27.12.85 Bulletin 85/52**

(45) Mention de la délivrance du brevet :
**07.09.88 Bulletin 88/36**

(84) Etats contractants désignés :
**AT BE CH DE FR GB IT LI LU NL SE**

(56) Documents cités :
**EP-A- 0 013 199**
**FR-A- 2 168 866**
**FR-A- 2 232 841**
**PATENTS ABSTRACTS OF JAPAN, vol. 8, no. 88 (E-240) [1525], 21st April 1984; JP - A - 599 865 (YUASA DENCHI K.K.) 19-01-1984**
**PATENTS ABSTRACTS OF JAPAN, vol. 8, no. 176 (E-260) [1613], 14th August 1984; JP - A - 59 71263 (TOSHIBA K.K.) 21-04-1984**

(73) Titulaire : **SOCIETE NATIONALE ELF AQUITAINE**
**Tour Aquitaine**
**F-92400 Courbevoie (FR)**

(72) Inventeur : **Armand, Michel**
**Domaine Jean-Jaurès Allée Maurice Ravel**
**F-38130 Echirolles (FR)**
Inventeur : **Chabagno, Jean-Michel**
**9 Rue de Suède**
**F-64000 Pau (FR)**
Inventeur : **Ricoux, Philippe**
**35 bld de l'Europe**
**F-69000 Oullins (FR)**
Inventeur : **Vassort, Guy**
**2681 Rue Victoria**
**Longueiul Quebec J4L 2L5 (CA)**
Inventeur : **Gauthier, Michel**
**237 Rue St. Ignace**
**La Prairie Quebec (CA)**
Inventeur : **Brochu, Fernand**
**2250 Labelle App. 7 Longueuil J4J 3K9**
**Quebec (CA)**
Inventeur : **Rigaud, Philippe**
**Les Charavelles Bât Azalée**
**F-38200 Vienne (FR)**

(74) Mandataire : **Boillot, Marc**
**SOCIETE NATIONALE ELF AQUITAINE Division Propriété Industrielle Tour Elf**
**F-92078 Paris la Défense Cédex 45 (FR)**

**EP 0 165 827 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention concerne un générateur électrochimique fonctionnant d'une manière réversible à température ambiante, dont l'électrolyte est une solution solide d'un composé ionique dans un matériau macromoléculaire, ce générateur étant caractérisé par le matériau actif de son électrode positive.

On a déjà proposé dans le brevet européen 13 199 des générateurs électrochimiques du type film mince dont l'électrolyte est une solution solide d'un composé ionique dans un matériau macromoléculaire. Selon ce brevet, l'électrode positive peut être constituée par le produit d'agglomération en une masse composite du matériau électrochimiquement actif, d'un composé inerte à conduction ionique et d'un matériau macromoléculaire identique ou similaire à celui constituant l'électrolyte. Dans ce même brevet européen, le matériau préféré pour la réalisation de l'électrolyte est un polyoxyde d'éthylène. De nombreux matériaux ont été proposés comme matière électrochimiquement active. Le choix de ces matériaux est plus restreint quand on veut réaliser des générateurs rechargeables, capables de donner des tensions élevées et stables au fur et à mesure des cycles de charge et de décharge.

De façon à réaliser des générateurs fonctionnant à température ambiante, il est préférable de choisir un matériau macromoléculaire constitué par un copolymère de l'oxyde d'éthylène et d'un éther oxyde cyclique, substitué ou non, présentant une chaîne du type polyéther, on obtient ainsi un matériau se présentant sous la forme d'une phase unique thermodynamiquement stable très favorable au bon fonctionnement de ces générateurs à température ambiante. En association avec ces électrolytes, il existe un certain nombre de matériaux électrochimiquement actifs qui peuvent être utilisés et qui permettent un fonctionnement réversible à température ambiante. On peut citer par exemple le dioxyde de molybdène, l'oxyde de vanadium, le disulfure de titane. Ces composés présentent la propriété commune de donner lieu essentiellement à des réactions d'insertion avec le cation du sel en solution dans le matériau d'électrolyte.

L'utilisation de ces matériaux, dénommés ci-après matériaux d'insertion puisqu'ils donnent lieu principalement à des réactions d'insertion, présente plusieurs inconvénients. En général, ce sont des matériaux chers dont la synthèse est délicate à mettre en œuvre. De plus les réactions d'insertion ne mettent en jeu qu'environ un seul électron par molécule de matériau actif (entre 1 et 1,5). De ce fait, la capacité théorique de l'électrode est faible. Par exemple quand le matériau actif est l'oxyde de vanadium $V_6O_{13}$, cette capacité est de l'ordre de 420 ah/kg de matière active. Elle est de l'ordre de 250 Ah/kg pour $TiS_2$.

Il a d'autre part été proposé sans grand succès divers matériaux d'électrodes autres que des matériaux d'insertion pour réaliser des générateurs électrochimiquement secondaires mais en associant ces matériaux avec des électrolytes très différents de ceux qui sont concernés par les générateurs selon l'invention. Il s'agit par exemple de sels fondus ou de solvants organiques. Jusqu'ici le meilleur exemple proposé est celui d'un générateur utilisant une pyrite de fer comme matériau actif d'une électrode, cette électrode étant associée à un électrolyte organique fonctionnant à température ambiante. (AMBIENT TEMPERATURE SECONDARY Li/$FeS_2$ CELLS G. H. NEWMAN ; L. P. KLEMANN, Proceedings of the 29th Power Sources Conference Juin 80). Selon cet article, une tentative a été faite pour réaliser un générateur rechargeable fonctionnant à température ambiante. Les auteurs de cet article ont testé toute une série d'électrolytes organiques comme par exemple le mélange dioxolanediméthoxyéthane comprenant en solution un organoborate de lithium ou tel que le lithium triethyl(N-pyrrolyl-borate dioxolane, ces tests ayant pour but de trouver un couple électrolyte matériaux d'électrode permettant un bon cyclage de l'accumulateur à température ambiante. En ce reportant à cet article, on voit que ces essais n'ont pas été favorables puisque le meilleur cyclage réalisé n'a permis d'atteindre que 22 cycles avec des capacités de décharge diminuant notablement au fur et à mesure de l'augmentation du nombre de cycles. On passe par exemple de 128 mA-heures pour le premier cycle à 71 mA-heures pour le 22$^e$ cycle, ce qui traduit une forte diminution de la capacité. Les auteurs de cet article ont conclu qu'ils n'étaient pas encore en mesure de faire fonctionner un générateur d'une manière réversible, selon un nombre important de cycles, à température ambiante, quand le matériau de l'électrode est $FeS_2$, c'est-à-dire un matériau donnant lieu, lors de sa réduction, à la nucléation de nouvelles espèces. Pour l'explication des différentes réactions concernées par cette réduction, on peut se reporter par exemple à l'article de M. B. CLARK LITHIUM BATTERIES, ÉDITÉ PAR J. M. CABANO 1983, ACADEMIC PRESS.

Sans vouloir émettre une théorie scientifique limitative, les auteurs de la présente invention pensent pouvoir expliquer cette impossibilité d'utilisation de $FeS_2$ comme matériau d'électrode d'un accumulateur réversible à électrolyte liquide à température ambiante par la génération au cours de la réduction, des mécanismes de transport de ces électrolytes de nouvelles espèces susceptibles de migrer ou de diffuser du fait de l'absence de sélectivité ; cette absence de sélectivité modifie les processus électrochimiques ou la disponibilité des matériaux actifs lors de la décharge ou de la recharge du générateur.

Au contraire, les inventeurs ont découvert qu'il était possible de faire fonctionner un générateur électrochimique à température ambiante et d'une manière réversible, selon un nombre important de cycles, à condition d'utiliser un générateur selon l'invention.

Pour cela, l'invention prévoit un générateur électrochimique comprenant une électrode négative, un électrolyte constitué par une solution solide d'au moins un sel en solution dans un matériau macromoléculaire, ladite solution solide étant constituée en majeure partie par une structure amorphe du type polyéther et présentant une conductivité ionique suffisante pour permettre le fonctionnement du générateur à température ambiante, et une électrode positive composite constituée par le produit d'agglomération d'une solution solide d'au moins un sel en solution dans un matériau macromoléculaire constitué en majeure partie par une structure amorphe du type polyéther, d'un matériau électrochimiquement actif et, éventuellement, d'un conducteur électronique. Ce générateur est caractérisé en ce que le matériau actif de l'électrode est un composé métallique susceptible d'être réduit par le cation du sel en solution dans l'électrolyte, cette réduction ayant lieu pendant les décharges, ledit composé métallique générant, lors de ladite réduction une ou plusieurs nouvelles espèces lesdites nouvelles espèces pouvant inclure le métal au degré d'oxydation zéro ledit composé métallique étant un composé à déplacement constitué soit par une chalcogénure d'un métal choisi parmi le cobalt, le nickel, le manganèse, le plomb, le bismuth, le cuivre, l'argent et le mercure, soit par du monosulfure de fer, soit par du phosphate de cuivre. Selon la nomenclature adoptée dans « Material for advanced Batteries » NATO CONFERENCES, 1979 MURPHY, pages 343, 347, de tels matériaux sont appelés des matériaux à déplacement. L'homme de l'art comprendra facilement que lorsque l'on parle de matériau à déplacement, on peut inclure des matériaux qui ne sont pas uniquement à déplacement et qui présentent certaines caractéristiques des matériaux d'insertion, l'important étant que les caractéristiques de déplacement soient prépondérantes. A titre d'illustration, on considère que l'oxyde de manganèse $MnO_2$ est un matériau à déplacement bien qu'il soit susceptible de donner lieu à des réactions d'insertions.

Par rapport aux électrodes composites réalisées avec un matériau électrochimiquement actif du type à insertion, les électrodes des générateurs selon l'invention présentent la particularité suivante.

Les électrodes composites du type à insertion peuvent être décrites comme étant formées de grains enrobés du matériau macromoléculaire constituant l'électrolyte, que ce soient les grains de matière active ou les grains de matériau à conduction électronique. Lors d'une décharge, les ions correspondant au matériau d'électrode négative viennent s'insérer dans le matériau actif de l'électrode positive en provoquant une augmentation de son volume, alors que lors de la charge, ce volume diminue, on rappelle que cette réaction d'insertion ainsi que la réaction inverse ne fait apparaître aucune nouvelle phase. Lesdites variations de volume sont parfaitement compensées par le matériau macromoléculaire qui est élastomère. Ainsi, à tout moment, c'est-à-dire aussi bien pendant une charge ou une décharge, une fin de charge ou une fin de décharge, on est en présence de grains de matériau électrochimiquement actif enrobés par le matériau macromoléculaire de l'électrolyte et directement au contact de celui-ci.

Pour les électrodes selon l'invention, au cours d'une charge ou d'une décharge, on est en présence de grains unitaires de matériau électrochimiquement actif ou d'agglomérats de ces grains, lesdits grains ou lesdits agglomérats étant chacun en contact avec ou même complètement entouré par des nouvelles phases correspondant aux espèces secondaires générées, ces nouvelles phases apparaissant en périphérie des grains unitaires et en périphérie ou au sein des agglomérats. L'ensemble est entouré du matériau macromoléculaire. Cette apparition de nouvelles phases, ou à l'inverse leur disparition, crée des variations de volume qui sont compensées par le caractère élastomérique du matériau macromoléculaire de l'électrolyte. Les phénomènes de diffusion et de convexion ne pouvant concerner que les phases périphériques, c'est-à-dire celles qui sont en contact direct avec le matériau macromoléculaire de l'électrolyte, on comprend donc que dans l'électrode selon l'invention, la convexion et la diffusion sont fortement limitées et que ces phénomènes sont beaucoup moins forts que dans le cas où les matériaux actifs sont en contact avec un électrolyte liquide. En particulier, ce phénomène ne concerne pas les espèces situées au sein des agglomérats de grains de matière active.

Ainsi, l'invention concerne aussi un générateur électrochimique du type précité qui est caractérisé en ce que le matériau actif de son électrode composite positive est un matériau à déplacement et en ce que, pendant les charges et les décharges de cette électrode composite comporte des grains unitaires de matériau actif et/ou des agglomérats de grains de matériau actif, lesdits grains unitaires ou lesdits grains des agglomérats étant en contact avec des phases qui correspondent aux espèces générées pendant le processus électrochimique, l'ensemble étant enrobé dans le matériau macromoléculaire à conduction ionique.

Dans le cas où l'électrode comporte uniquement des grains unitaires, chaque grain est entouré d'une couche comprenant les nouvelles phases.

A titre de matériau macromoléculaire utilisé pour réaliser la solution solide de l'électrolyte ou celle de l'électrode, les deux solutions pouvant être identiques ou différentes, on peut utiliser pour réaliser l'invention d'une manière avantageuse, un copolymère de l'oxyde d'éthylène et d'un second motif choisi parmi les éthers oxydes cycliques, substitués ou non.

Le second motif du copolymère peut être choisi parmi les éthers oxydes cycliques substitués représentés par la formule (I)

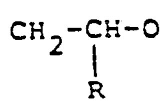

(I)

dans laquelle R représente :

— soit un radical Ra alkyle ou alcényle comprenant notamment de 1 à 12, de préférence de 1 à 4 atomes de carbone,

— soit un radical ($CH_2$—O—Re—Ra, dans lequel Ra a la même signification que ci-dessus et Re représente un radical polyéther de formule —($CH_2$—$CH_2$—O)$_p$, variant de 0 à 10, et la proportion du deuxième motif par rapport à l'oxyde d'éthylène est choisie de telle sorte que le matériau macromoléculaire à conduction ionique ne présente pas de cristallinité aux températures d'utilisation tout en présentant une bonne conductivité.

Le radical R peut être un radical alkyle, de préférence un radical méthyl, et le deuxième motif est présent à raison de 0 — non inclus — à 25 % en pourcentage molaire par rapport au nombre total de moles. D'une manière préférentielle, ce pourcentage est compris entre 1,5 et 25 % quand le sel est du perchlorate de lithium, et il est supérieur à 5 % quand le sel est un trifluorométhane-sulfate de lithium.

Le radical R peut aussi être un radical —$CH_2$—O—Re—Ra, ou O—CH=$CH_2$ ou —$CH_2$—O—$CH_2$—CH=$CH_2$ et le second motif est présent à raison de zéro — non inclus — à 30 %, le pourcentage étant un pourcentage molaire exprimé par rapport au nombre total de moles de l'électrolyte. D'une manière préférentielle, ce pourcentage est compris entre 1,5 et 30 % quand le sel est du perchlorate de lithium et supérieur à 5 % pour le trifluorométhane-sulfonate de lithium.

Selon un mode particulier de réalisation de l'invention, le second motif du copolymère est choisi parmi les éther-oxydes-cycliques, substitués ou non, dont le cycle comporte plus de trois maillons. Son pourcentage molaire est de préférence comprise entre zéro — non inclus — et 30 %.

A titre d'exemple non limitatif, ces éther-oxydes cycliques dont le cycle comporte plus de trois maillons peuvent être : l'oxétane, le tétrahydrofuranne, le 1-3 dioxane, le dioxolane et leurs dérivés substitués.

Dans le cas où le second motif monomère est choisi parmi les éther-oxydes de formule (I), la chaîne obtenue a une structure de polyoxyde d'éthylène dont certains hydrogènes sont substitués par des radicaux. Cette chaîne est caractérisée par une alternance régulière de deux carbones et d'un oxygène :

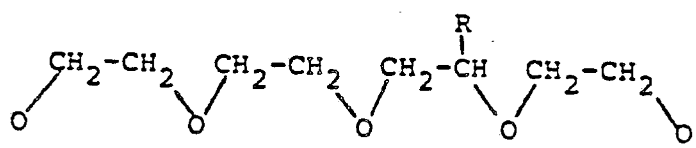

Dans le cas où le deuxième motif est choisi parmi les éther-oxydes cycliques dont le cycle comporte plus de trois maillons, on obtient une chaîne polyéther dans laquelle les oxygènes peuvent être séparés par plus de deux carbones ou par un seul carbone, selon la nature du second motif de départ.

Par exemple, un copolymère oxyde d'éthylène-méthyl-3-oxétane aura cette structure

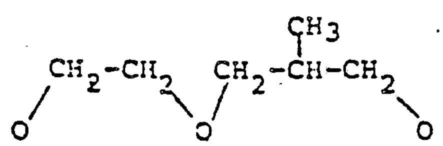

un copolymère oxyde d'éthylène, dioxolane :

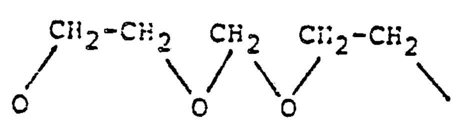

un copolymère oxyde d'éthylène méthyl 4-THF :

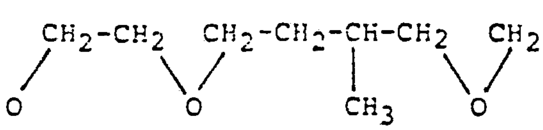

Selon un mode de réalisation préféré de l'invention, le cation du sel en solution dans le matériau

macromoléculaire de l'électrolyte et de l'électrode est un cation $Li^+$ et le composé métallique à déplacement réductible par le lithium est un chalcogénure d'un élément choisi parmi le fer, le cobalt, le nickel, le manganèse, le plomb, le bismuth, le cuivre, l'argent et le mercure.

Selon un premier mode de réalisation de l'invention, le composé métallique à déplacement est un sulfure. De préférence, il s'agit d'un mono- ou di-sulfure.

Selon un second mode de réalisation de l'invention, ce composé métallique à déplacement est un oxyde de manganèse $MnO_2$, un oxyde de cuivre CuO ou $Cu_2O$, un oxyde de plomb, ou un oxyde de bismuth.

Selon un troisième mode de réalisation, le composé métallique est un phosphate.

Ainsi, selon l'invention, on obtient un générateur électrochimique de courant qui peut fonctionner d'une manière réversible selon un nombre important de cycle, à des températures allant jusqu'à la températarture ambiante, ce générateur mettant en œuvre, comme matériau d'électrode, des matériaux qui ne donnent pas lieu principalement à des réactions de déplacement, c'est-à-dire des réactions qui génèrent des nouvelles espèces, ces réactions pouvant mettre en jeu plus d'un électron et être concommittantes à des réactions d'insertion.

Sans vouloir là encore donner des explications limitatives, les demandeurs pensent que la bonne rechargeabilité à température ambiante des générateurs réalisés selon l'invention peut être attribuée au fait que la matière active de l'électrode est contenue dans une électrode composite comportant comme électrolyte un copolymère qui permet le fonctionnement à température ambiante mais aussi au fait que la sélectivité du transport dans l'électrolyte et la nature solide de l'électrolyte bloquent la convexion des espèces intermédiaires et bloquent ou du moins restreignent, la diffusion de ces espèces. En particulier, les espèces ioniques de charge supérieure ou égale à 2 diffusent très lentement dans un tel électrolyte, ce qui est dû à leur action réticulante. De plus, l'absence de fluidité et les propriétés élastomères de cet électrolyte sont favorables au maintien du contact entre elles, des espèces générées lors du processus de déplacement électrochimique.

Les générateurs selon l'invention permettent donc d'utiliser, comme matériau d'électrode, des matériaux usuels facilement disponibles et qui peuvent, pour certains d'entre eux, libérer plus d'un électron par atome de matière active.

Mais l'invention sera mieux comprise à la lecture des exemples suivants, exemples donnés à titre d'illustration et ne devant nullement être considérés comme limitatifs, lecture faite en référence aux figures annexées qui représentent toutes des courbes de décharge-charge pour des accumulateurs, c'est-à-dire la variation de la tension en fonction du taux d'utilisation, ledit taux étant égal au rapport de l'énergie récupérée sur l'énergie totale. Ces différentes figures concernent différents matériaux d'électrode :

fig. 1 $FeS_2$
fig. 2 $NiS_{1,75}$
fig. 3 NiS
fig. 4 FeS
fig. 5 $CoS_2$
fig. 6 $MnO_2$
fig. 7 $Cu_4O(PO_4)_2$

## Première série d'exemples

On a réalisé le générateur suivant, noté générateur A avec les éléments suivants : une électrode négative constituée par un feuillard de lithium de 100 microns d'épaisseur. Un électrolyte polymère constitué par une solution solide de perchlorate de lithium dans un copolymère oxyde d'éthylène-oxyde de méthyl-glycidyl-éther, (OE-MGE), comportant 10 % en poids de MGE. Dans cette solution, le rapport du nombre d'hétéro-atomes du copolymère au nombre d'atomes du cation est égal à 20/l. L'électrode positive est une électrode composite réalisée par épandage, sur un feuillard d'aluminium, du mélange suivant :

— Electrolyte OE-MGE, 15 % MGE en poids, comprenant en solution $LiClO_4$ à 20/l (73 % en volume)
— Noir de carbone (7 % en volume)
— $FeS_2$, sous forme d'une poudre de granulométrie comprise entre 10 et 15 microns, obtenue à partir de pyrite naturelle utilisée sans traitement.

L'électrode positive a une capacité de 3,61 C/m$^2$ (coulomb par cm$^2$) ; l'épaisseur totale du générateur est de 200 µ. On a cyclé le générateur A, à 26 °C, sous une densité de courant constante égale à 7 µA/cm$^2$, on a représenté sur la figure 1, la courbe (1) de première décharge de l'accumulateur. On remarque que l'on décharge l'accumulateur jusqu'à environ 30 % d'utilisation, ce qui, en fonction de la capacité de l'électrode permet de dire que l'on a libéré environ 3,4 électrons. La courbe (2) représente la première recharge de l'accumulateur. Cette courbe montre bien les deux paliers caractéristiques de $FeS_2$. Enfin on a représenté la courbe (3) de l'évolution de la tension lors de la 35$^e$ décharge. Cette 35$^e$ décharge a permis de libérer 3,2 électrons, ces électrons comme pour la première recharge — étant comptés par rapport à une molécule de $FeS_2$. Ce nombre élevé d'électrons montre bien que les espèces finales sont principalement $Li_2S$ et le fer métallique, ce qui a été confirmé par une analyse aux rayons X. Enfin, on

peut noter que les courbes (1) et (3) sont communes sur une grande partie du taux d'utilisation, ce qui montre la bonne rechargeabilité de l'accumulateur puisque l'on a pu effectuer trente-cinq cycles sans baisse de l'activité.

Dans la même série d'exemples, on a réalisé l'accumulateur A' identique à l'accumulateur A mais dans lequel on a remplacé la poudre de $FeS_2$ par un mélange de poudre de fer et de poudre de sulfure de lithium $Li_2S$, dans des proportions telles que le rapport stoéchiométrique suivant soit conservé :

2 $Li_2S$, 1 Fe, et avec une granulométrie inférieure à 5 $\mu$ on a cyclé ce générateur, à la même température et sous la même densité de courant. Pour cela on a commencé par charger A' de façon à monter son potentiel jusqu'à la valeur de EO = 3,05 V (la même que pour l'accumulateur A). Le fait de pouvoir charger cet accumulateur A' montre bien que les réactions qui sont en jeu sont des réactions de déplacement entre $Li_2S$ et le Fer, on a cyclé ensuite l'accumulateur A' et représenté la courbe (5) de deuxième charge et la courbe (6) de la 35$^e$ décharge.

On remarque que pour cet accumulateur A' on a un taux d'utilisation de 30 % (alors qu'on avait 80 % environ pour A) mais que l'on obtient le même nombre de cycles que pour A. Les résultats peuvent s'expliquer de la façon suivante. Les bonnes qualités de recharge sont attribuables à la limitation des transports dans l'électrolyte. Les faibles taux d'utilisation obtenus sont attribuables, quant à eux, au fait que l'on n'obtient pas les mêmes propriétés de maintien en contact que dans l'accumulation A. Dans l'accumulation A', les deux composants initiaux ne sont pas en contact parfait lors des processus électrochimiques comme le sont les espèces pour $FeS_2$.

De cet exemple comparatif, on peut tirer les conclusions que les générateurs rechargeables selon l'invention fonctionnent bien, d'une part grâce à la limitation des transports dans l'électrolyte mais d'autre part grâce au maintien en contact des espèces générées lors des réactions de transport.

Enfin, dans la même série d'exemple, on réalise à nouveau l'accumulation A' et on le fait fonctionner à 75 °C on remarque une baisse notoire du taux d'utilisation et du potentiel de la réaction, cette baisse augmentant au cours du cyclage. Ceci semble donc confirmer que les phénomènes de diffusion qui existent à haute température sont pénalisants et que l'invention permet, au contraire, un bon fonctionnement à température ambiante.

Si on réalise le même essai avec l'accumulateur A, on s'aperçoit que le phénomène noté pour A' est beaucoup plus limité.

Deuxième série d'exemples

On a réalisé un accumulateur B identique à l'accumulateur A mais dans lequel le matériau à déplacement est $NiS_{1,75}$, pour lequel la capacité de l'électrode positive est de 2,33 C/cm$^2$, on a effectué une série de charges-décharges et représenté certaines courbes sur la figure 2. La courbe de première décharge (10) part de 2,5 V et montre une décharge jusqu'à 90 % d'utilisation. La courbe de première charge n'amène pas de remarque particulière. La courbe (12) représente la deuxième décharge et la courbe (14) la centième décharge. Les courbes (10), (12) et (14) présentent une très longue partie commune et si on peut noter une évolution sensible entre la première et la seconde décharge, on note très peu d'évolution entre la deuxième décharge et la centième décharge.

Enfin, cet exemple met bien encore en évidence que l'on a des réactions de déplacement car si on avait des réactions d'insertion, on serait obligé de respecter la formule stoéchiométrique de $NiS_2$.

Troisième série d'exemples

On a réalisé deux accumulateurs C et D, identiques à l'accumulateur A mais avec les caractéristiques suivantes :

| | C | D |
|---|---|---|
| Mat. Electrode | NiS | FeS |
| Capacité C/cm$^2$ | 2,3 | 1,6 |

on a cyclé ces accumulateurs sous une intensité de courant constante (d = 7,5 $\mu$A/cm$^2$) à 26 °C.

Pour l'accumulateur C, on a représenté figure 3 la courbe (20) de première décharge, la courbe (21) de recharge, pour D on a représenté figure 4, la courbe (22) de première décharge, la courbe (23) de

dixième décharge.

On remarque que l'allure de ces courbes représentées figures 3 et 4 est très analogue à celle des courbes obtenues pour ces mêmes matériaux utilisés avec des électrolytes sels fondus, pour lesquels il est parfaitement connu que NiS et FeS fonctionnent selon des processus à déplacement. L'étude de ces matériaux de sel fondu est reportée dans le rapport IREQ n° 2 779 « Recherche et développement sur les accumulateurs en sels fondus » G. VASSORT. M. GAUTHIER, D. FAUTEUX, R. BELLEMARE.

Cet exemple montre bien que l'invention concerne non seulement les disulfures à déplacement mais aussi les monosulfures à déplacement.

## Quatrième série d'exemples

Dans cet exemple, on cycle un accumulateur E identique à l'accumulateur A mais dont l'électrode positive comporte du disulfure de cobalt $CoS_2$ et dont le matériau macromoléculaire de l'électrolyte est un copolymère oxyde d'éthylène-oxyde de propylène. On a effectué le cyclage à 26 °C avec une densité de courant de 7 µA/cm².

On a représenté sur la figure 5 la courbe (3) de dixième décharge, qui montre clairement qu'à la 10ᵉ décharge on obtient encore 85 % d'utilisation, c'est-à-dire que l'on récupère 3,4 électrons, et que le plateau de décharge se situe à 1,5 V. Les courbes de décharge obtenues pour une centaine de cycles sont identiques à la courbe (30).

## Cinquième exemple

Dans cet exemple, l'accumulateur F, identique à A mais dans lequel le matériau d'électrode est un dioxyde de manganèse $MnO_2$, a été cyclé (75 cycles) à 26 °C avec une densité de courant de 8 µA/cm².

La figure 6 représente les courbes de cyclage obtenue.

La courbe (31) est la première décharge, la courbe (32) la 2ᵉ, (33) la 25ᵉ et (34) la 75ᵉ.

Après la première décharge jusqu'à 80 %, on a rechargé l'accumulateur à 52 % d'utilisation. La seconde décharge fournit environ 50 % d'utilisation, ce qui revient à dire que l'on a un rapport de 1 entre la charge et la décharge. Ce rapport se retrouve pour les autres cycles.

Ce cyclage, obtenu avec des matériaux non optimisés, montre un effet surprenant de l'invention, car, $MnO_2$ a toujours été considéré comme ne pouvant pas donner lieu à des cycles réversibles en association avec un électrolyte polymère.

## Sixième exemple

Cet exemple concerne un générateur dont le matériau actif est un oxyphosphate de cuivre $Cu_4O(PO_4)_2$.

Le générateur de cet exemple est constitué de la manière suivante :

— Electrode positive : sur un collecteur d'aluminium (feuille de 15 microns d'épaisseur), on a déposé par épandage :

65 % en poids de $Cu_4O(PO_4)_2$

5 % en poids de noir d'acétylène

31 % en poids d'un copolymère OE-MGE et 24 % en poids de $LiClO_4$.

— Electrolyte. Copolymère oxyde d'éthylène oxyde de butylène (OE-OB) comprenant 18 % en poids de $LiClO_4$.

— Electrode négative : feuillard de lithium de 60 microns d'épaisseur.

L'électrode positive avait une épaisseur de 20 microns et l'électrolyte de 65 microns, et l'ensemble se présentait sur la forme d'une pastille circulaire d'1 cm de diamètre.

On avait donc pour l'électrode positive une capacité de 7,5 mAh/cm² (23,6 mA au total).

Ce générateur a été soumis à des cycles de décharge et de charge successives à densité de courant constante de 16 µA/cm² à une température de 40 °C (soit un régime de C/470).

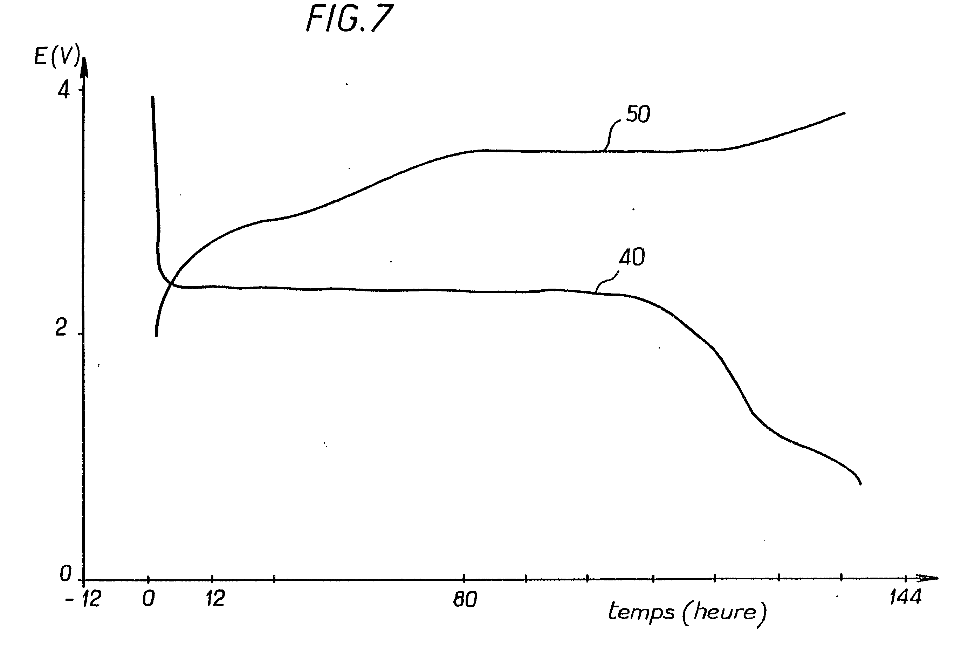

Les courbes de fonctionnement stabilisé (plus de 50 cycles) sont représentées figure 7 (courbe 40 pour les décharges et courbe 50 pour les charges). Elles montrent un plateau de décharge à 2,36 V. En arrêtant la décharge à 1 V on observe des taux d'utilisations de 30 % en considérant le passage de 2 électrons par atome de cuivre, ce qui correspond à une énergie effectivement récupérée de 8 Cb/cm².

Mais l'invention n'est pas limitée aux modes de réalisation donnés, elle en englobe au contraire toutes les variantes. Par exemple, il est bien évident que le matériau macromoléculaire peut être réticulé ou non.

**Revendications**

1. Générateur électrochimique fonctionnant à température ambiante d'une manière réversible comprenant une électrode négative, un électrolyte constitué par une solution solide d'au moins un sel en solution dans un matériau macromoléculaire, ladite solution solide étant constituée en majeure partie par

une structure amorphe du type polyéther et présentant une conductivité ionique suffisante pour permettre le fonctionnement du générateur à température ambiante et une électrode positive composite constituée par le produit d'agglomération d'une solution solide d'au moins un sel en solution dans un matériau macromoléculaire constitué en majeure partie par une structure amorphe du type polyéther, d'un matériau électrochimiquement actif et, éventuellement, d'un conducteur électronique, caractérisé en ce que le matériau actif de l'électrode est un composé métallique susceptible d'être réduit par le cation du sel en solution dans l'électrolyte, cette réduction ayant lieu pendant les décharges, ledit composé métallique générant, lors de ladite réduction, une ou plusieurs espèces pouvant inclure le métal au degré zéro, ledit composé métallique étant un composé à déplacement constitué soit par un chalcogénure d'un métal choisi parmi le cobalt, le nickel, le manganèse, le plomb, le bismuth, le cuivre, l'argent et le mercure, soit par du mono sulfure de fer, soit par du phosphate de cuivre.

2. Générateur électrochimique selon la revendication 1, caractérisé en ce que le chalcogénure est un sulfure.

3. Générateur électrochimique selon la revendication 2, caractérisé en ce que le sulfure est un mono ou un disulfure.

4. Générateur électrochimique selon la revendication 1, caractérisé en ce que le sulfure est choisi parmi $CoS_2$, NiS, $NiS_{1,75}$.

5. Générateur électrochimique selon la revendication 1, caractérisé en ce que le chalcogénure est un oxyde.

6. Générateur électrochimique selon la revendication 5, caractérisé en ce que l'oxyde est l'oxyde de molybdène $MnO_2$.

7. Générateur électrochimique fonctionnant à température ambiante d'une manière réversible comprenant une électrode négative, un électrolyte constitué par une solution solide d'au moins un sel en solution dans un matériau macromoléculaire, ladite solution solide étant constitué en majeure partie par une structure amorphe du type polyéther et présentant une conductivité ionique suffisante pour permettre le fonctionnement du générateur à température ambiante et une électrode positive composite constituée par le produit d'agglomération d'une solution solide d'au moins un sel en solution dans un matériau macromoléculaire constitué en majeure partie par une structure amorphe du type polyéther, d'un matériau électrochimiquement actif et, éventuellement, d'un conducteur électronique, caractérisé en ce que le matériau actif de son électrode composite positive est un matériau à déplacement constitué soit par un chalcogénure d'un métal choisi parmi le cobalt, le nickel, le manganèse, le plomb, le bismuth, le cuivre, l'argent et le mercure, soit par du monosulfure de fer, soit par du phosphate de cuivre et en ce que, au moins pendant les périodes de charge et de décharge de cet accumulateur, ladite électrode composite positive comporte des grains unitaires de matériau actif et/ou des agglomérats de grains de matériau actif, lesdits grains unitaires ou lesdits grains des agglomérats étant en contact avec des phases qui correspondent à des espèces générées pendant le processus électrochimique, l'ensemble étant enrobé dans le matériau macromoléculaire à conduction ionique.

8. Générateur électrochimique selon la revendication 7, caractérisé en ce que l'électrode composite positive comporte uniquement, comme matière électrochimiquement active, des grains unitaires, chacun desdits grains étant entouré d'une couche constituée par lesdites nouvelles phases.

9. Générateur électrochimique selon la revendication 7, dans lequel l'électrode positive comporte uniquement, en tant que matière électrochimiquement active, des agglomérats de grains, caractérisé en ce que les phases correspondant aux espèces générées pendant le processus électrochimiques sont situées au sein desdits agglomérats et/ou à leurs périphéries.

10. Générateur selon l'une des revendications 7, caractérisé en ce que le matériau à déplacement est chalcogénure, en particulier un sulfure ou un oxyde.

11. Générateur selon la revendication 7, caractérisé en ce que le phosphate de cuivre est $Cu_4O(PO_4)_2$.

**Claims**

1. An electrochemical generator capable of operating reversibly at ambient temperature, comprising a negative electrode, an electrolyte constituted by a solid solution of at least one salt in solution in a macromolecular material, the said solid solution being constituted to a large extent by an amorphous structure of the polyether type and possessing sufficient ionic conductivity to allow operation of the generator at ambient temperature, and a composite positive electrode constituted by the agglomeration product of a solid solution of at least one salt in solution in a macromolecular material constituted to a large extent by an amorphous structure of the polyether type with an electrochemically active material and optionally an electronic conductor, said generator being characterised in that the active material of the electrode is a metal compound able to be reduced by the cation of the salt in solution within the electrolyte, this reduction occuring during the discharges, the said metal compound generating during the said reduction one or more species including the metal with an oxidation degree equal to zero, the said metal compound being a displacement compound constituted either by a chalcogenide of a metal

selected from among cobalt, nickel, manganese, lead, bismuth, copper, silver and mercury or by iron monosulfide or copper phosphate.

2. The electrochemical generator according to claim 1, characterised in that the chalcogenide is a sulfide.

3. The electrochemical generator according to claim 2, characterised in that the sulfide is a monosulfide or a disulfide.

4. The electrochemical generator according to claim 1, characterised in that the sulfide is selected from among $CoS_2$, NiS and $NiS_{1.75}$.

5. The electrochemical generator according to claim 1, characterised in that the chalcogenide is an oxide.

6. The electrochemical generator according to claim 5, characterised in that manganese oxide $MnO_2$ is used as the oxide.

7. An electrochemical generator capable of operating reversibly at ambient temperature, comprising a negative electrode, an electrolyte constituted by a solid solution of at least one salt in solution in a macromolecular material, the said solid solution being constituted to a large extent by an amorphous structure of the polyether type and possessing sufficient ionic conductivity to allow operation of the generator at ambient temperature, and a composite positive electrode constituted by the agglomeration product of a solid solution of at least one salt in solution in a macromolecular material constituted to a large extent by an amorphous structure of the polyether type with an electrochemically active material and optionally an electronic conductor, said generator being characterised in that the active material of the composite positive electrode is a displacement material constituted either by a chalcogenide of a metal selected from among cobalt, nickel, manganese, lead, bismuth, copper, silver and mercury or by iron monosulfide or copper phosphate and in that, at least during the charge and discharge cycles of said generator, the said composite positive electrode comprises unitary grains of active material and/or agglomerates of grains of active material, the said unitary grains or grains of the said agglomerates being in contact with phases that correspond to species generated during the electrochemical process, the whole being embedded in the macromolecular material with ionic conduction.

8. The electrochemical generator according to claim 7, characterised in that the composite positive electrode comprises only unitary grains as the chemically active material, each grain being coated with a layer constituted by the said new phases.

9. The electrochemical generator according to claim 7, wherein the composite positive electrode comprises only agglomerates of grains as the electrochemically active material, characterised in that the phases that correspond to the species generated during the electrochemical process are located within the said agglomerates and/or at the pheriphery thereof.

10. The electrochemical generator according to claim 7, characterised in that the displacement material is a chalcogenide and in particular a sulfide or an oxide.

11. The electrochemical generator according to claim 7, characterised in that the copper phosphate consists of $Cu_4O(PO_4)_2$.

**Patentansprüche**

1. Elektrochemischer Generator, der bei Umgebungstemperatur reversibel arbeitet und eine negative Elektrode, einen Elektrolyten, der aus einer festen Lösung wenigstens eines Salzes in Lösung in einem makromolekularen Material besteht, wobei die feste Lösung zusammengesetzt ist aus einem Hauptanteil einer amorphen Struktur vom Polyethertyp und eine Ionenleitfähigkeit aufweist, die für den Betrieb des Generators bei Umgebungstemperatur ausreicht, sowie eine als Verbundkörper ausgebildete positive Elektrode umfaßt, die zusammengesetzt ist aus dem Agglomerationsprodukt einer festen Lösung wenigstens eines Salzes in Lösung in einem makromolekularen Material, das zusammengesetzt ist aus einem Hauptanteil einer amorphen Struktur vom Polyethertyp, einem elektrochemisch aktiven Material und gegebenenfalls einem Elektronenleiter, dadurch gekennzeichnet, daß das aktive Material der Elektrode eine Metallverbindung ist, die durch das Kation des Salzes in Lösung im Elektrolyten reduziert werden kann, wobei diese Reduktion während der Entladungen stattfindet, die Metallverbindung während der Reduktion eine oder mehrere Verbindungen bildet, die das Metall mit der Oxydationsstufe Null umfassen können, und eine Verdrängungsverbindung darstellt, gebildet durch ein Chalcogenid eines Metalls, ausgewählt aus der Gruppe Cobalt, Nickel, Mangan, Blei, Wismut, Kupfer, Silber oder Quecksilber oder aus Eisenmonosulfid oder Kupferphosphat.

2. Elektrochemischer Generator nach Anspruch 1, dadurch gekennzeichnet, daß das Chalcogenid ein Sulfid ist.

3. Elektrochemischer Generator nach Anspruch 2, dadurch gekennzeichnet, daß das Sulfid ein Mono- oder Disulfid ist.

4. Elektrochemischer Generator nach Anspruch 1, dadurch gekennzeichnet, daß das Sulfid ausgewählt ist aus der Gruppe $CoS_2$, NiS und $NiS_{1,75}$.

5. Elektrochemischer Generator nach Anspruch 1, dadurch gekennzeichnet, daß das Chalcogenid ein Oxid ist.

6. Elektrochemischer Generator nach Anspruch 5, dadurch gekennzeichnet, daß das Oxid $MnO_2$ ist.

7. Elektrochemischer Generator, der bei Umgebungstemperatur reversibel arbeitet und eine negative Elektrode, einen Elektrolyten, der aus einer festen Lösung wenigstens eines Salzes in Lösung in einem makromolekularen Material besteht, wobei die feste Lösung zusammengesetzt ist aus einem Hauptanteil einer amorphen Struktur vom Polyethertyp und eine Ionenleitfähigkeit aufweist, die für den Betrieb des Generators bei Umgebungstemperatur ausreicht, sowie eine als Verbundkörper ausgebildete positive Elektrode umfaßt, die zusammengesetzt ist aus dem Agglomerationsprodukt einer festen Lösung wenigstens eines Salzes in Lösung in einem makromolekularen Material, das zusammengesetzt ist aus einem Hauptanteil einer amorphen Struktur vom Polyethertyp, einem elektrochemisch aktiven Material und gegebenenfalls einem Elektronenleiter, dadurch gekennzeichnet, daß das aktive Material seiner positiven Verbundkörperelektrode eine Verdrängungsverbindung ist, gebildet durch ein Chalcogenid eines Metalls, ausgewählt aus der Gruppe Cobalt, Nickel, Mangan, Blei, Wismut, Kupfer, Silber oder Quecksilber oder aus Eisenmonosulfid oder Kupferphosphat und daß wenigstens während der Dauer der Ladung und Entladung dieses Akkumulators die positive Verbundkörperelektrode einzelne Körner des Aktivstoffes und/oder Agglomerationen von Aktivstoffkörnern enthält, wobei die einzelnen Körner oder die Körner der Agglomerate mit den Phasen in Kontakt stehen, die den während des elektrochemischen Prozesses gebildeten Verbindungen entsprechen, und das Ganze von dem Ionenleitung aufweisenden makromolekularen Stoff umgeben ist.

8. Elektrochemischer Generator nach Anspruch 7, dadurch gekennzeichnet, daß die positive Verbundkörperelektrode als elektrochemisch aktiven Stoff ausschließlich einzelne Körner enthält, wobei jedes dieser Körner von einer aus den neuen Phasen bestehenden Schicht umgeben ist.

9. Elektrochemischer Generator nach Anspruch 7, wobei die positive Elektrode als elektrochemisch aktiven Stoff Kornagglomerate enthält, dadurch gekennzeichnet, daß die den während des elektrochemischen Prozesses gebildeten Verbindungen entsprechenden Phasen im Inneren der Agglomerate und/oder an ihrer Peripherie angeordnet sind.

10. Generator nach Anspruch 7, dadurch gekennzeichnet, daß die Verdrängungsverbindung ein Chalcogenid ist, insbesondere ein Sulfid oder ein Oxid.

11. Generator nach Anspruch 7, dadurch gekennzeichnet, daß das Kupferphosphat $Cu_4O(PO_4)_2$ ist.

FIG.1

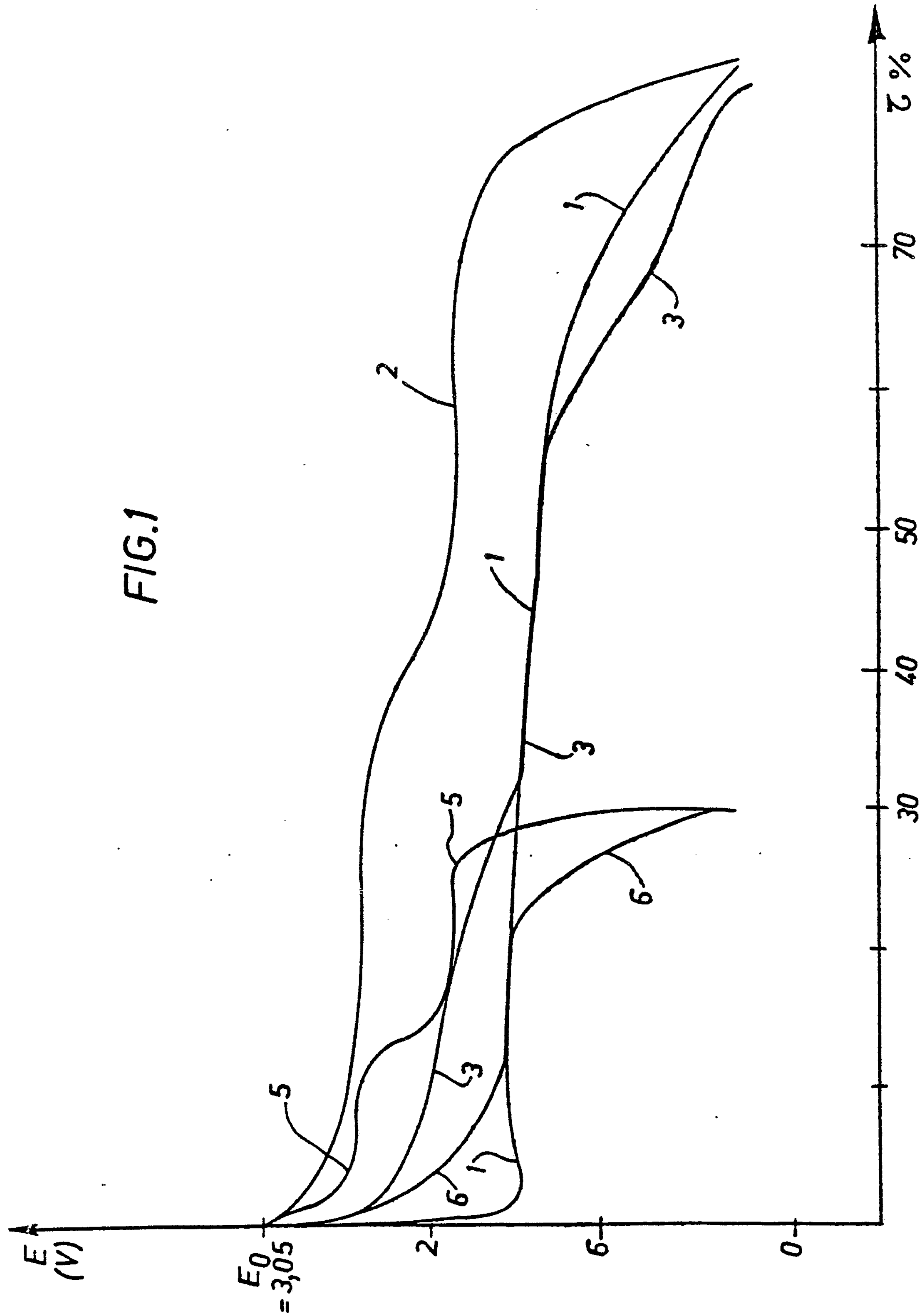

FIG. 2

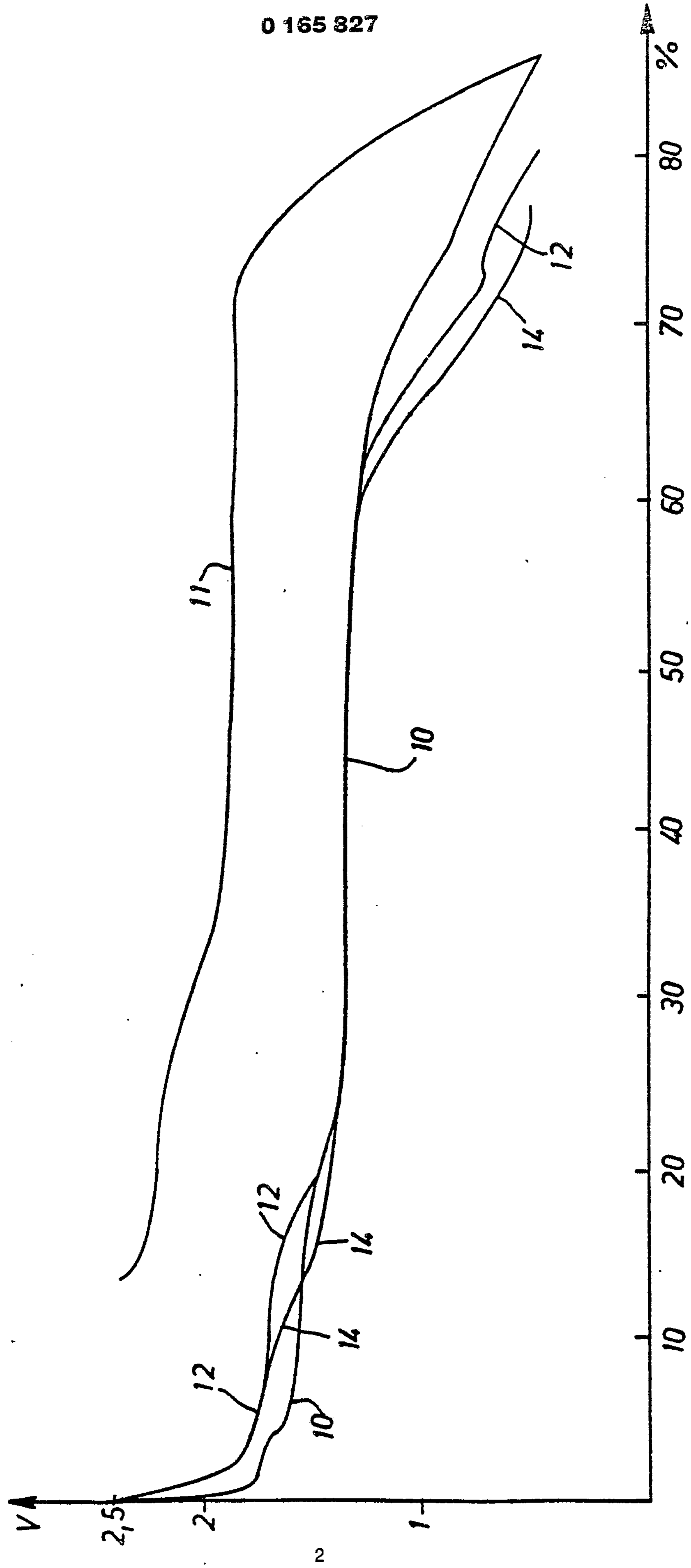

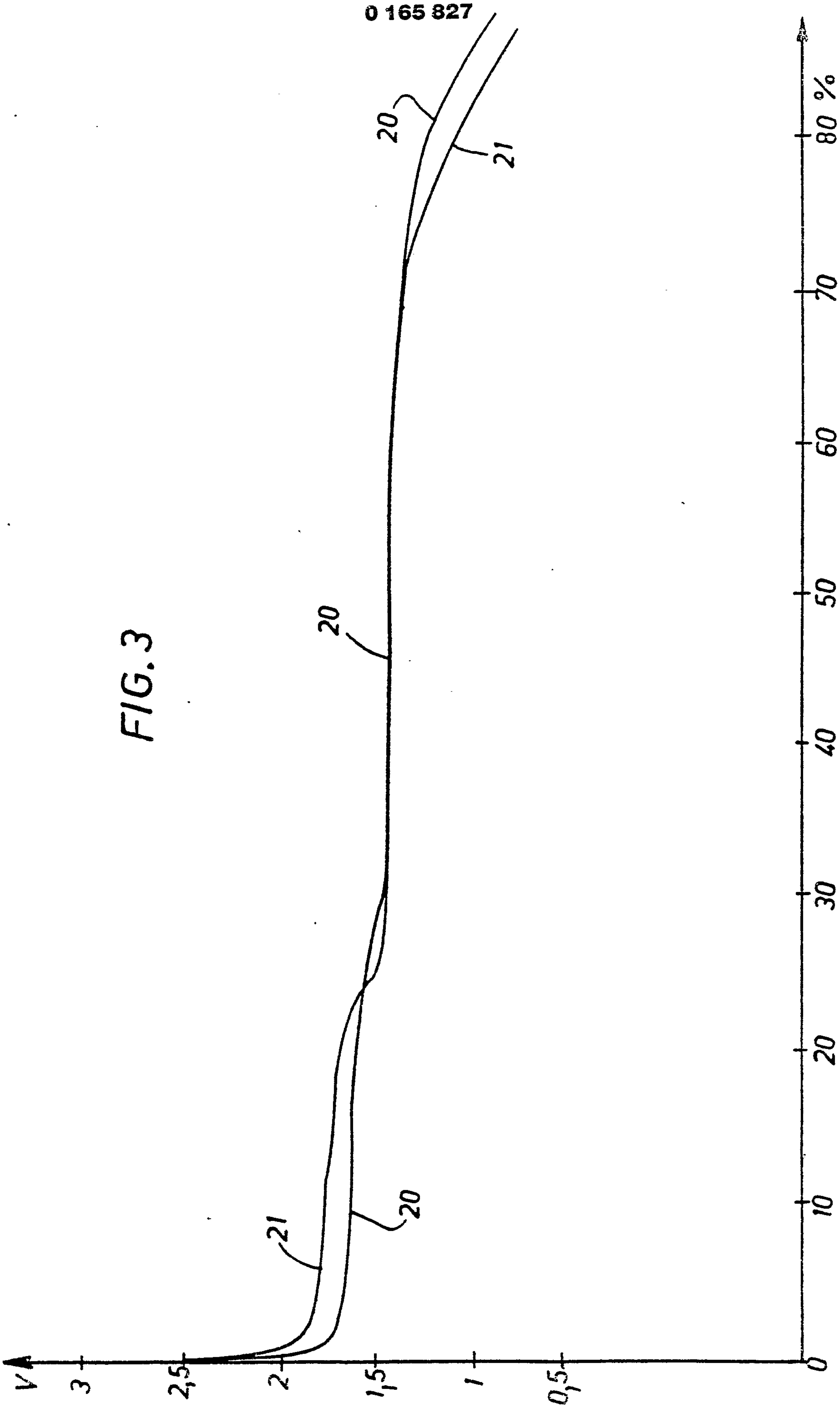


FIG. 3

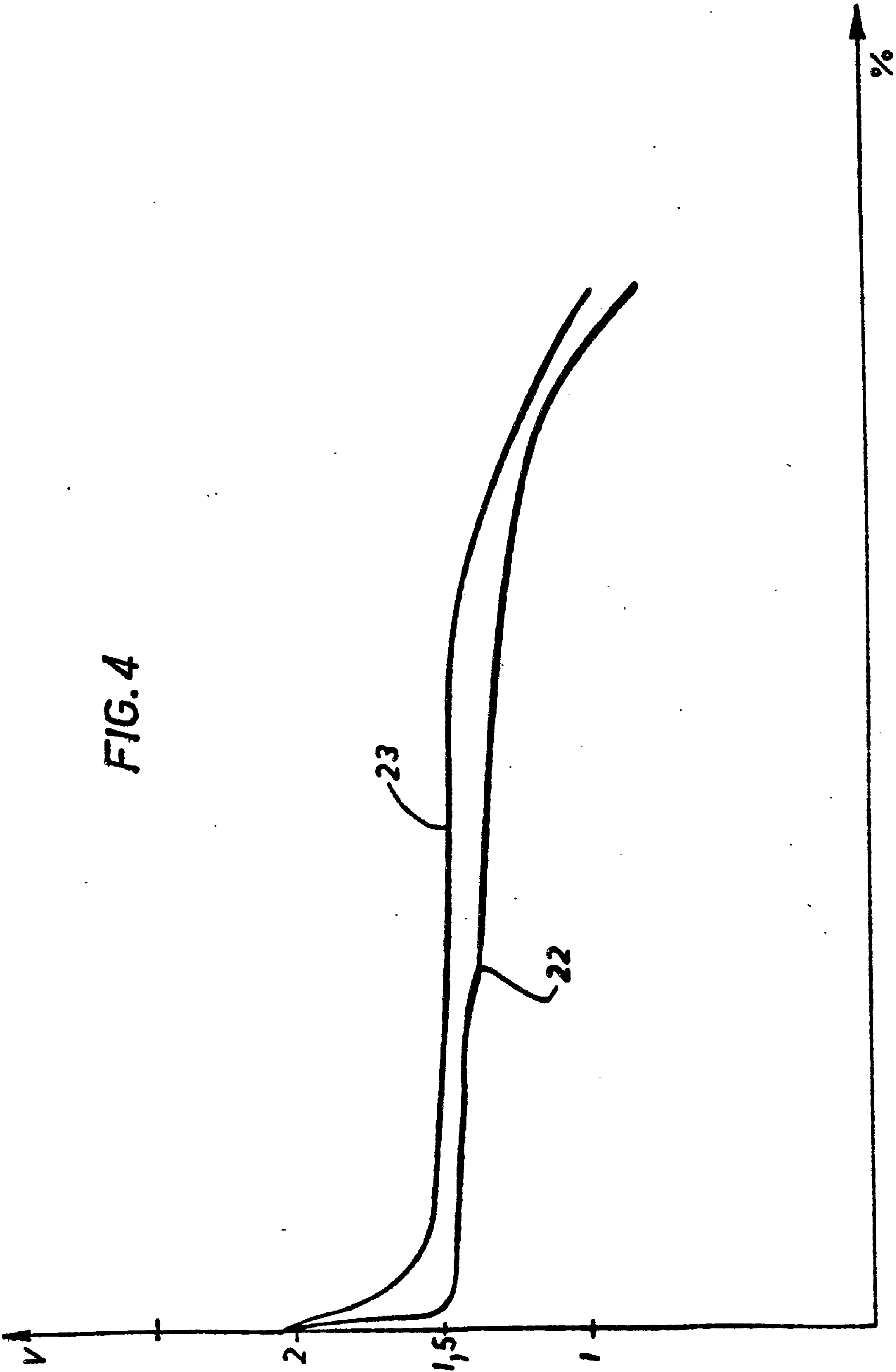


FIG. 4

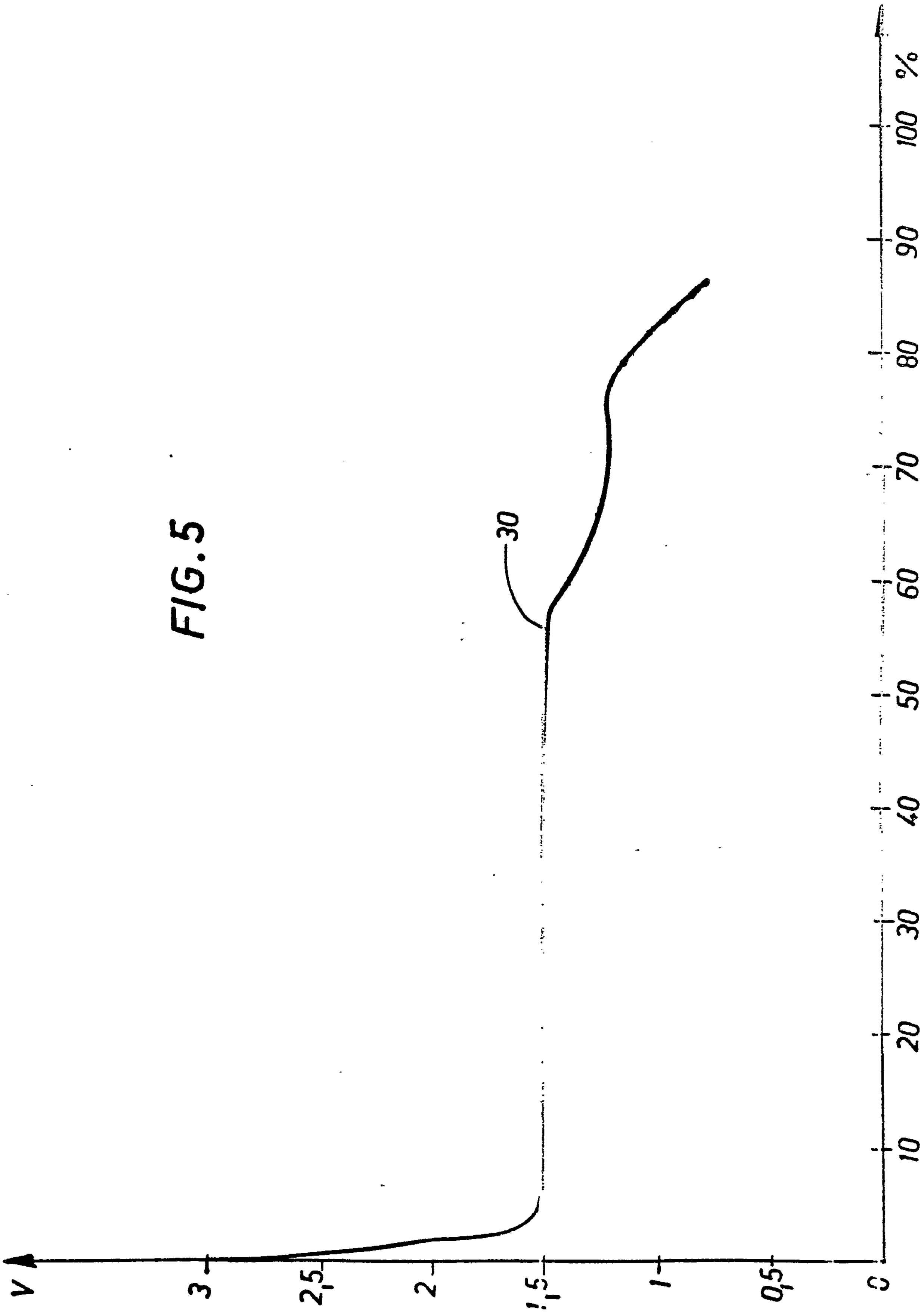


FIG. 5

FIG. 6

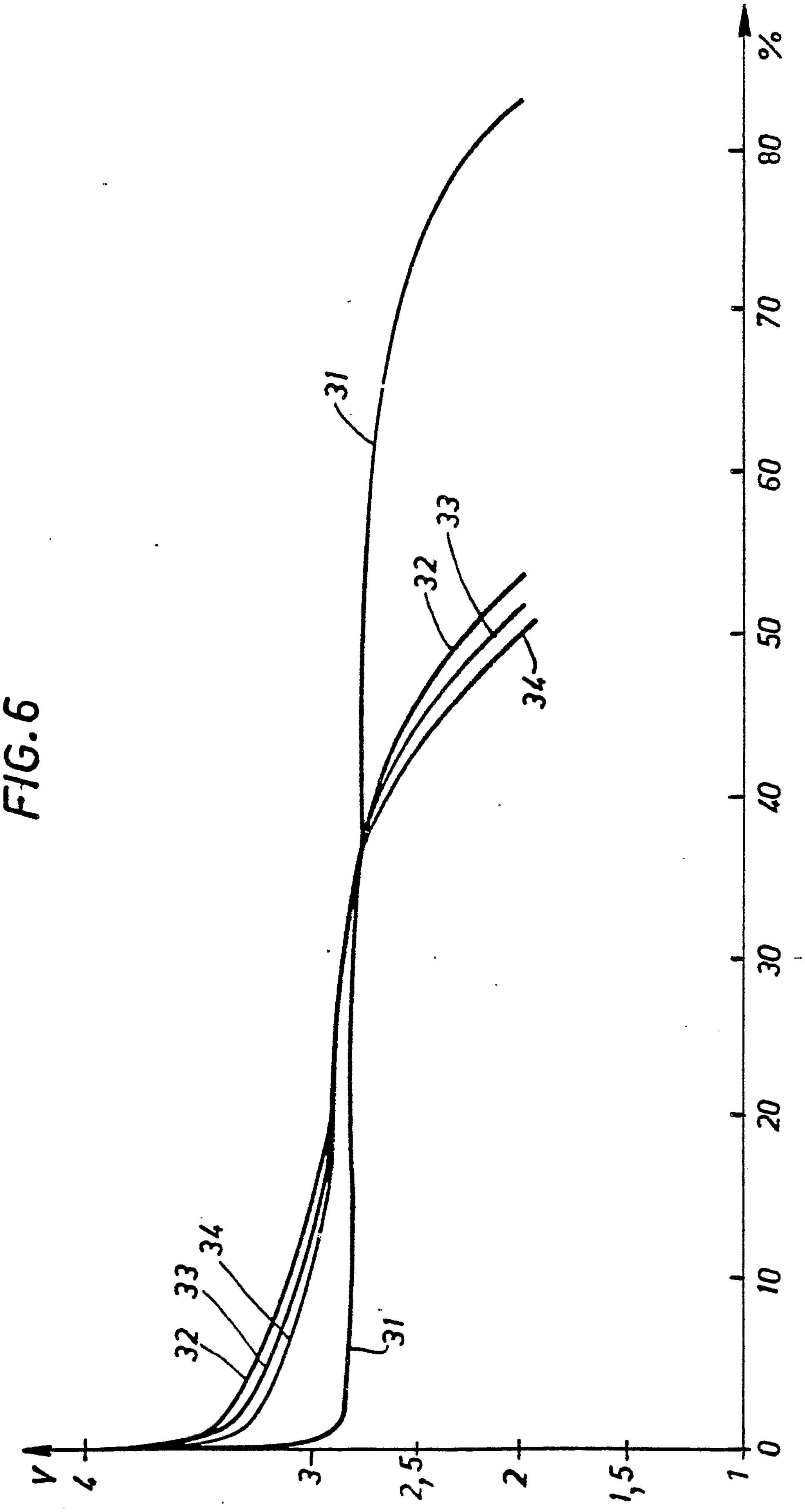

FIG. 7